# EUROPÄISCHE PATENTSCHRIFT

(11) **EP 2 452 175 B1**
(45) Veröffentlichungstag und Bekanntmachung des Hinweises auf die Patenterteilung: **16.12.2015**
(21) Anmeldenummer: 10724524.3
(22) Anmeldetag: 18.06.2010
(51) Int. Cl.: G01M 15/10

(54) **MESSGERÄT ZUR ABGASMESSUNG**
MEASURING DEVICE FOR MEASURING EXHAUST GAS
APPAREIL DE MESURE DESTINÉ À LA MESURE DES GAZ D'ÉCHAPPEMENT

(30) Priorität: 09.07.2009 DE 102009027599
(43) Veröffentlichungstag der Anmeldung: 16.05.2012
(73) Patentinhaber: MAHA Maschinenbau Haldenwang GmbH & Co. KG, 87490 Haldenwang (DE)
(72) Erfinder: KESEBERG, Engelbert, 87435 Kempten (DE); TSCHINKEL, Elmar, 87448 Waltenhofen (DE); KNOX, Gunther, 87781 Ungerhausen (DE); DAMBIETZ, Jens, 87490 Haldenwang (DE)
(74) Vertreter: MERH-IP Matias Erny Reichl Hoffmann Patentanwälte PartG mbB
(86) Internationale Anmeldenummer: PCT/EP2010/058664
(87) Internationale Veröffentlichungsnummer: WO 2011/003720

(56) Entgegenhaltungen:
- DE-A1- 19 653 333
- US-A- 5 918 256
- Anonymous: "Anforderungen für die Messung von Russpartikeln" 6. März 2009 (2009-03-06), XP002600226 Gefunden im Internet: URL:http://www.eastsolutions.eu/html/messi gkeiten.html [gefunden am 2010-09-10]

## Beschreibung

Die Erfindung betrifft ein Messgerät zur Abgasmessung von Kraftfahrzeugen, das unter anderem eine kombinierte Messung der Rauchgastrübung, der Partikelkonzentration, sowie des CO-, CO₂-, HC-, O₂, NO, NO₂, NOₓ- und NH₃ - Abgasanteils und somit eine Verkürzung der Messzeitdauer ermöglicht.

Messgeräte zur Abgasmessung von Kraftfahrzeugen werden zur Prüfung und Diagnose von Kraftfahrzeugabgasen eingesetzt. Aufgrund der zunehmend strengeren Abgasvorschriften gemäß beispielsweise Euro 4 bzw. 5 sind aus dem Stand der Technik unterschiedliche Abgasmessgeräte für Kraftfahrzeuge bekannt. Beispielsweise messen sogenannte 4- bzw. 5- Gas Abgasmessgeräte für benzin- und gasbetriebene Ottomoren mittels einer IR-Messbank die Gase CO, CO₂, HC, O₂ bzw. NO. Diesel-Abgastester (Opazimeter) messen mit einem Lichttrübungsmessverfahren die Rauchgastrübung. Andere Abgasmessgeräte, sogenannte Partikelmessgeräte, messen den Partikelanteil im Diesel- und Benzinabgas. Weiterhin sind Geräte bekannt, die den NO, NO₂ bzw. NOₓ Gehalt im Abgas messen, oder Geräte die den NH₃-Anteil messen.

Die Verwendung unterschiedlicher Messgeräte führt jedoch zu einer langen Messzeitdauer, wenn beispielsweise unterschiedliche Messungen am selben Fahrzeug durchgeführt werden müssen, da für jede Messung ein anderes Gerät angeschlossen und bedient werden muss. Ein weiterer Nachteil ist die umständliche Handhabung mehrerer Geräte im mobilen Einsatz, beispielsweise bei mobilen Abgasprüfstellen. Ein weiterer Nachteil sind die hohen Herstellungskosten, da Abgasmessgeräte für unterschiedliche Abgasmessungen zum Teil ähnliche funktionale Komponenten erfordern, wie beispielsweise eine Abgassonde, ein Anzeige-Display, ein Gehäuse oder eine Pumpe mit Pumpenmotor.

US 5 918 256 A beschreibt ein Fahrzeugemissionsanalyse-Interface-System zum Bereitstellen einer Probe eines Abgases eines Testfahrzeugs am Einlass eines Analysegerätes, um eine quantitative Messung von ausgewählten Schadstoffen bereitzustellen.

Die DE 19 653 333 A1 betrifft einen Abgastester für Brennkraftmaschinen bei dem das Messgas mit einer Pumpe durch eine Messzelle gepumpt wird, der Wasserdampfanteil im Messgas durch einen Kondensatabscheider abgeschieden und mit einer weiteren Pumpe abgepumpt wird, eine Messeinrichtung den Wasserstand im Kondensatabscheider ermittelt.

Unbekannt beschreibt in "Anforderungen für die Messung von Russpartikeln" (Internet URL: http://www.eastsolutions.eu/html/messigkeiten.html) Messverfahren zur Bestimmung von Rußpartikeln in einem Abgas.

Es ist deshalb eine Aufgabe der vorliegenden Erfindung, ein Messgerät zur Abgasmessung von Kraftfahrzeugen bereitzustellen, das eine reduzierte Abgasmesszeitdauer bei der Anwendung mehrerer unterschiedlicher Abgasmessverfahren ermöglicht. Diese Aufgabe wird durch ein Messgerät zur Abgasmessung gemäß den Merkmalen des Patentanspruchs 1 gelöst. Die abhängigen Patentansprüche betreffen vorteilhafte Ausgestaltungen der Erfindung.

Erfindungsgemäß umfasst das Messgerät zur Bestimmung von mehreren Abgaskomponenten im Abgas von Verbrennungsmotoren eine Abgassonde, eine Partikelmesskammer, einen Feinfilter, einen Wasserabscheider, eine Infrarot-Messbank, einen O₂-Sensor und einen Gasauslass. Das Abgasmessgerät ist insbesondere durch die erfindungsgemäße Anordnung der vorgenannten Bauteile gekennzeichnet, die derart ist, dass ein Messgas über die Abgassonde eintritt, dann in die Partikelmesskammer geleitet wird, dann in den Feinfilter geleitet wird, dann in den Wasserabscheider geleitet wird, dann in die Infrarot-Messbank geleitet wird, dann zu dem O2-Sensor geleitet wird, und schließlich über den Gasauslass wieder in die Umgebung austritt.

Ferner ist ein K-Wert für die Opazität des Messgases mittels eines linearen Umrechnungsverfahrens aus einem durch die Partikelmesskammer ermittelten Messgas-Partikelkonzentrationswertes ermittelbar. Dadurch kann mittels der Partikelmesskammer auch gleichzeitig die Opazität ermittelt werden und vermeidet dadurch ein separates Opazimeter, wodurch eine kompaktere und kostengünstigere Bauweise ermöglicht wird. Die Erfinder haben bei Versuchsreihen festgestellt, dass die Messwerte der erfindungsgemäßen Partikelmesskammer linear mit dem K-Wert für die Opazität des Messgases korreliert sind. Daher können aus dem von der Partikelmesskammer mittels des Laserstreulichtverfahrens aufgenommenen Messwerte auch zur Bestimmung der Opazität verwendet werden. Dadurch kann eine zusätzliche zeitaufwendige Opazitätsmessung vermieden werden. Gewöhnlich wird die Dieselabgasuntersuchung mittels einer Trübungsmessung ermittelt, wobei mit einer grünen LED der Abgasstrahl in einer Messkammer der Länge von ca. 43 cm beleuchtet und vermessen wird. Durch die erfindungsgemäße Partikelmesskammer und die Berechnung der Opazität aus der gemessenen Massenkonzentration kann eine große, zusätzliche Messzelle zur Trübungsmessung vermieden werden.

Die erfindungsgemäße Kombination und Anordnung der Messgerätkomponenten ermöglicht ein multifunktionales Abgasmessgerät für alle gängigen Abgasmessarten. Erfindungsgemäß erfolgt die Messung von mehreren Abgaskomponenten auf Basis einer definierten Abgasvolumeneinheit. Mit anderen Worten werden anhand einer bestimmten Abgasvolumeneinheit, die durch die erfindungsgemäße Anordnung der Messkomponenten geleitet wird, die verschiedenen Abgaskomponenten und Messungen durchgeführt. Besonders vorteilhaft ist, das die Messung damit quasi-simultan erfolgt, da die definierte Volumeneinheit beispielsweise in wenigen Sekundenbruchteilen von der Messung in der Partikelmesskammer zur Messung in die IR-Messkammer geleitet wird. Die Messung aller Messwerte kann jedoch auch gleichzeitig erfolgen.

Dies führt zu einer kürzeren Abgasmesszeit, da mehrere Messungen mit einem Gerät quasi-simultan durchgeführt werden können; dadurch reduzieren sich die Installationszeiten (z.B. nur einmaliges Anbringen der Abgassonde) sowie die Messzeiten, da der gleiche Abgasstrom für mehrere Messungen genutzt werden kann, indem er erst durch die Partikelmesskammer, dann durch die IR-Messbank und dann zum O₂-Sensor geleitet wird. Die quasi-simultane Messung verschiedener Abgaswerte erlaubt die gleichzeitige Anzeige aller gemessenen Werte in Echtzeit und deren Verfolgung im Zeitverlauf. Dies ist besonders vorteilhaft, da die Änderung einer Fahrzeug- bzw. Motorabstimmung zur Korrektur eines Abgaswertes zur gleichzeitigen Veränderungen eines anderen Abgaswertes führen kann. Diese Abhängigkeiten können durch die Erfindung in Echtzeit gemessen und kontrolliert werden und ermöglichen damit eine schnelle, effiziente Einstellung der Abgaswerte. Mittels herkömmlicher getrennter Messverfahren können diese wechselseitigen Abhängigkeiten der verschiedenen Abgaswerte von der Fahrzeugeinstellung nur schwierig und unter hohem Zeitaufwand erkannt und korrigiert werden.

Der erfindungsgemäße Aufbau ermöglicht das Verwenden der gleichen Messgerätskomponenten für unterschiedliche Abgasmessarten, beispielsweise ist nur eine Abgassonde, ein Wasserabschneider, eine Spannungsversorgung, ein Gehäuse, und ein Anzeige-Display erforderlich, wodurch eine kompaktere und günstigere Bauweise ermöglich wird. Besonders vorteilhaft ist ebenfalls, dass der Benutzer nicht mehr unterschiedliche Messgeräte für verschiedene Abgasmessarten bedienen muss, sondern nur noch ein Gerät, was die Bediensicherheit erhöht.

Vorzugsweise misst die Partikelmesskammer die Messgas-Partikelkonzentration (Massenkonzentration) mittels eines Laserstreulichtverfahrens. Der Einsatz eines Laserstreulichtverfahrens für eine Abgasmessung ermöglicht eine wesentlich kompaktere Bauweise der Partikelmesskammer, wobei beispielsweise die Partikelmesszelle zylinderförmig mit einer Höhe von 8 cm und einem Querdurchmesser 4 cm ausgebildet sein kann.

Vorzugsweise umfasst das Messgerät weiter einen Pumpenmotor, eine Messgaspumpe und eine Wasserabscheiderpumpe, wobei der Pumpenmotor die Messgaspumpe und die Wasserabscheiderpumpe antreibt. Dadurch können die Pumpe und der Motor für unterschiedliche Messarten genutzt werden, wohingegen bei aus der einschlägigen Technik bekannten separaten Messgeräten jeweils eine separate Messgaspumpe, eine Wasserabscheiderpumpe und ein Pumpenmotor für die 4-/5-Gas-Messung, die Opazitäts-Messung, und die Partikelmessung benötigt wird.

Vorzugsweise ist die Messgaspumpe in einer Messgasleitung zwischen dem Wasserabscheider und der Infrarot-Messbank angeordnet. Vorzugsweise sind die Messgasumpe und die Wasserabscheiderpumpe als Doppelmembranpumpen ausgebildet.

Vorzugsweise wird das Messgas nach der IR-Messbank zu einem NO-Sensor, einem NO₂-Sensor, und/oder einem NH₃-Sensor geleitet, die zu dem O₂-Sensor parallel geschaltet sind.

Vorzugsweise durchläuft das Messgas vor Eintritt in die Partikelmesskammer ein Heizelement. Die Erfinder haben bei der Entwicklung der erfindungsgemäßen Partikelmesskammer mittels eines Laserstreulichtverfahrens den Effekt beobachtet, dass durch Kondensationströpfchen im Abgasstrom optische Störeffekte bei der laser-basierten Partikelmessung entstehen können. Diese Störeffekte können durch ein vorangeschaltetes Heizelement durch Erwärmen des Abgasstroms zuverlässig vermieden werden.

Zusammenfassend wird durch die vorliegende Erfindung ein Messgerät zur quasisimultanen Messung unterschiedlicher Abgaskomponenten von Verbrennungsmotoren, wie die Rauchgastrübung, die Partikelkonzentration, sowie des CO-, CO₂-, HC-, O₂, NO, NO₂, NOₓ - und NH₃ - Abgasanteils, ermöglicht.

Hierbei ist die erfindungsgemäße Kombination und Anordnung der Messgerätkomponenten und die Verschlauchung (Anordnung der Leitungen) entscheidend. Beispielsweise stellt die Anordnung des Wasserabscheiders stromab der Partikelmesskammer und stromauf der IR-Messbank zuverlässig sicher, dass einerseits das Messgas von für die IR-Messung störender Feuchtigkeit und Partikeln bereinigt wird, andererseits vermeidet es, das die Partikelkonzentration durch den Wasserabscheider verändert wird, bevor diese in der Partikelmesskammer gemessen wurde. Weiterhin erlaubt die erfindungsgemäße Anordnung und Verschlauchung, das zur zur Messung der Rauchgastrübung, der Partikelkonzentration, sowie des CO-, CO₂-, HC-, O₂, NO, NO₂, NOₓ- und NH₃ - Abgasanteils nur insgesamt ein Pumpenmotor, eine Messgaspumpe und eine Wasserabscheiderpumpe benötigt wird.

Im Gegensatz zu den marktüblichen Messgeräten, ermöglicht das erfindungsgemäße Kombinationsgerät eine signifikant verkürzte Abgasmesszeit und erleichtert die Handhabung des Geräts im mobilen Einsatz als auch im Werkstatt-Einsatz. Weiterhin können baugleiche oder ähnliche Komponenten des Messgeräts eingespart werden, da für das erfindungsgemäße Messgerät nur eine Abgassonde, ein Wasserabscheider, eine Spannungsversorgung, ein Gehäuse und ein Anzeige-Display notwendig sind. Die erfindungsgemäße Verwendung eines Laserstreuchlichtverfahrens zur Bestimmung der Massenkonzentration und der Berechnung der Opazität aus der Massenkonzentration ermöglicht weiterhin eine sehr kompakte Bauweise durch die laser-basierte Messzelle und durch Einsparung einer separaten Opazitäts-Messeinheit.

Bevorzugte Ausführungsformen der vorliegenden Erfindung werden im Folgenden unter Bezugnahme auf die beigefügte Zeichnung näher beschrieben.
Fig. 1 zeigt schematisch einen Aufbau eines erfindungsgemäßen Messgeräts gemäß einem Ausführungsbeispiel der vorliegenden Erfindung;
Fig. 2 zeigt beispielhaft die Abhängigkeit der Massenkonzentration von dem Laserstreulicht der Partikelmesskammer und beispielhaft den linearen Zusammenhang des K-Wertes der Opazität von der gemessenen Massenkonzentration.

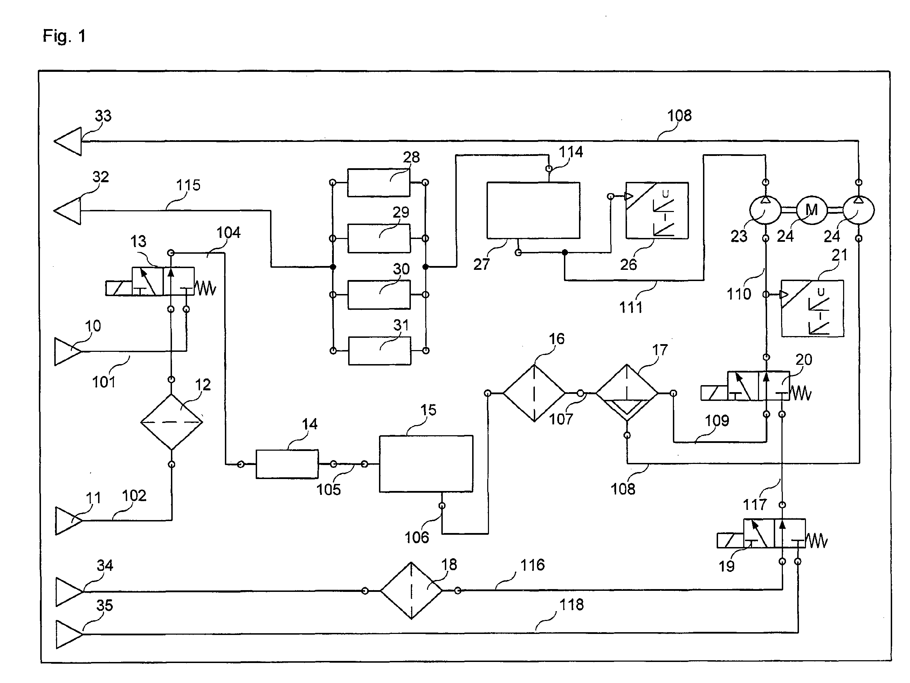

Fig. 1 zeigt schematisch einen Aufbau eines Messgeräts gemäß einem Ausführungsbeispiel der vorliegenden Erfindung. Das Messgerät umfasst eine Abgassonde 10, die in das Auspuffrohr des zu untersuchenden Fahrzeugs gebracht wird. Die vom Fahrzeug aufgenommenen Abgasproben werden über eine Abgassonden-Leitung 101 zu einem Nullpunktkalibrierventil 13 geleitet. Dieses Ventil ist ein 3/2 stromlos offen-Ventil um Abgasproben anzusaugen. Weiterhin verfügt das Messgerät über einen Umgebungslufteinlass 11. Die von der Umgebungsluft aufgenommenen Luftproben werden über eine Umgebungsluftleitung 102 über einen Feinfilter 12 zu dem Nullpunktkalibrierventil 13. Durch wahlweises Umschalten des Nullpunktkalibrierventils 13 kann zwischen dem Ansaugen von Abgas- oder Umgebungsluft gewechselt werden. Zur Kalibrierung der Partikelmesskammer wird "saubere" Luft aus dem Umgebungslufteinlass 11 verwendet.

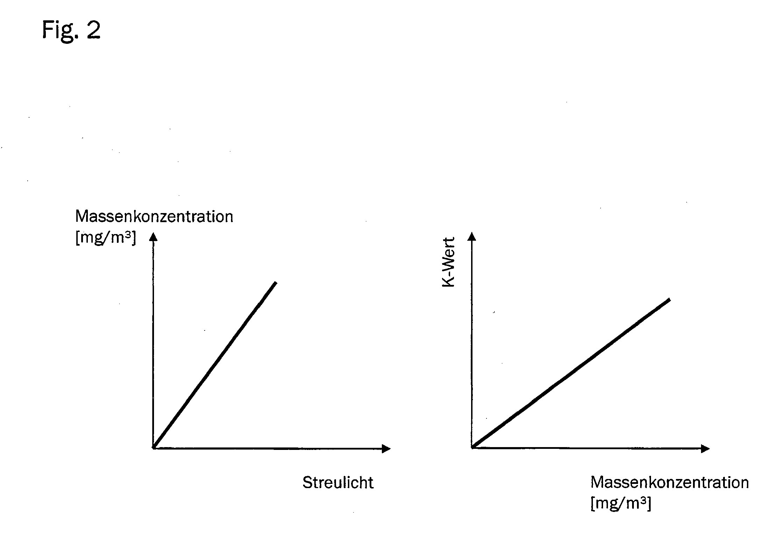

Stromab zu der Nullpunktkalibriereinheit 13 ist über eine Leitung 104 ein Heizelement 14 angeordnet. Die Abgase kühlen auf der ca. 1.5 m langen Leitungsstrecke von der Abgassonde 10 zum Heizelement 114 ab. Dadurch können durch Kondensation Wassertröpfchen in der Abgasluft entstehen, die zu optischen Störeffekten in der nachfolgend angeordneten Partikelmesskammer 15 führen könnte. Das Heizelement 14 erwärmt die Abgasproben und reduziert dadurch die Anzahl und Größe der Wassertröpfchen im Messgas. Über eine Partikelmesskammer-Leitung 105 wird das Messgas von dem Heizelement 14 in die Partikelmesskammer 15 geleitet. In der Partikelmesskammer 15 wird mittels eines Laserstreulichtverfahrens die Massenkonzentration in mg/m³ der im Abgas enthaltenden Rußpartikel bestimmt. Hierbei wird ein roter Laserstrahl in den Abgasstrahl gelenkt, wo dieser an den Abgasrußpartikeln gestreut wird. Diese Streuung des Laserlichts an den Abgasrußpartikeln wird über einen in der Partikelmesskammer 15 befindlichen optischen Empfänger (nicht gezeigt) detektiert, über einen angeschlossenen Verstärker (nicht gezeigt) verstärkt und anschließend in einer angeschlossenen Datenverarbeitungseinheit (nicht gezeigt) ausgewertet. Aus der Stärke des detektierten gestreuten Laserlichts wird die Massenkonzentration in mg/m³ der im Abgas enthaltenden Rußpartikel bestimmt. Dies ist im linken Schaubild in Fig. 2 illustriert, das beispielhaft und schematisch die Abhängigkeit der Massenkonzentration von dem Laserstreulicht der Partikelmesskammer zeigt.

Aus der ermittelten Massenkonzentration der Rußpartikel wird ein K-Wert in 1/m für die Opazität des Messgases mittels eines linearen Umrechnungsverfahrens errechnet. Die Erfinder haben bei Versuchsreihen festgestellt, dass die Messwerte der Massenkonzentration des laserbasierten Streulichtverfahrens linear mit dem K-Wert für die Opazität des Messgases korreliert sind. Dies ist im rechten Schaubild in Fig. 2 illustriert, das beispielhaft und schematisch den linearen Zusammenhang des K-Wertes der Opazität von der gemessenen Massenkonzentration zeigt. Daher können die von der Partikelmesskammer 15 mittels des Laserstreulichtverfahrens aufgenommenen Messwerte auch zur Bestimmung der Opazität verwendet werden. Dadurch ist keine separate Opazitätsmessvorrichtung notwendig. Dies ist besonders vorteilhaft, da gängige Opazitätsmessvorrichtungen ein LED-basiertes Messverfahren mit einer grünen LED einsetzen, die eine ca. 43cm lange Messzelle benötigen. Durch das erfindungsgemäße Laserstreulichtverfahren kann daher die Rußpartikelkonzentration und die Opazität der Abgase mittels einer äußerst kompakten Messzelle, die eine Höhe von 8 cm und einem kreisförmigen Querdurchmesser von 4 cm aufweist, bestimmt werden.

Stromab der Partikelmesskammer 15 ist über eine Feinfilterleitung 106 ein Feinfilter 16 angeordnet, stromab dieses Feinfilters 16 ist über eine Wasserabscheider-Leitung 107 ein Wasserabscheider 17 angeordnet. Mittels des Feinfilters 16 und des Wasserabscheiders 17 wird das Messgas für die IR-Messung von störenden Verunreinigungen und Feuchtigkeit gesäubert.

Das im Wasserabscheider 17 abgeschiedene Wasser wird mittels einer Wasserabscheiderpumpe 24 über eine Wasserauslass-Leitung 108 über den Wasserauslass 33 ausgeschieden. Stromab des Wasserabscheiders 17 ist über eine Messgas-Prüfleitung 109 zur Aufnahme des Messgases aus dem Wasserabscheider 17 ein Messgas-Prüfventil 20 angeordnet, das in Verbindung mit einer Leitung 117 ist, die mit einem Nullgasventil 19 verbunden ist. Das Messgas-Prüfventil 20 und das Nullgasventil 19 sind als 3/2 stromlos offen-Ventile ausgebildet. Über das Nullgasventil 19 wird dem Messgas-Prüfventil 20 ein Gemisch aus Umgebungsluft und Kalibriergas zugeführt. Die Umgebungsluft wird über einen Umgebungslufteinlass 34 angesaugt und durch einen Aktivkohlefilter 18 vor Eintritt in das Nullgasventil 19 gereinigt. Das Kalibriergas wird dem Nullgasventil 19 über eine-Kalibriergassonde 35 zugeführt. Das Kalibriergas wird zur Kalibrierung der IR Messbank 27 verwendet.

Stromab der Messgas-Prüfeinheit 20 ist eine Messgaspumpe 23 angeordnet, die als Doppelmembranpumpen ausgebildet ist. Mittels der Messgaspumpe 23 werden die Messgase über eine IR-Messbank-Leitung 111 zur IR-Messbank 27 befördert.

Die IR-Messbank kann mittels einer Infrarotmessung die im Messgas enthaltenen CO-, CO₂- und HC- Anteile und zusätzlich den A-Wert (Maß für den O₂-Partialdruck) ermitteln. Um weiterhin die O₂-, NO, NO₂ und NH₃-Anteile im Messgas bestimmen zu können, können stromab der IR-Messbank über eine Sensor-Leitung 114 ein O₂-Sensor 28, ein NO-Sensor 29, ein NO₂-Sensor 30 und ein NH₃-Sensor 31 in Parallelschaltung angeordnet sein. Über eine Gasauslassleitung 115 tritt das Messgas über einen Gasauslass 32 aus dem Messgerät aus.

Die Messgasleitungen 114 und 115 und die Anschlüsse für die Sensoren 29, 30 und 31 können auch wie in dem zuvor beschriebenen Ausführungsbeispiel eingerichtet sein, ohne jedoch die Sensoren 29, 30 und 31 vorzusehen. Diese können optional zu einem späteren Zeitpunkt nachgerüstet werden.

Zwischen der Messgaspumpe 23 und dem Wasserabscheider 17 ist ein Drucksensorelement 21 angeordnet; ein weiteres Drucksensorelement 26 ist zwischen der Messgaspumpe 23 und IR-Messbank 27 angeordnet. Diese Drucksensorelemente messen den Luftdruck, und können zudem Strom- und Spannungswerte beispielsweise der Messbank 27 aufnehmen. Aus den gemessenen Luftdruckwerten der Drucksensorelemente 21 und 26 kann beispielsweise erkannt werden, ob sich eine der Eingangssonden des Messgeräts im Wasser befindet. In diesem Fall kann das Messgerät abgeschaltet werden, um eine Beschädigung der Messtechnik durch Wassereintritt zu verhindern.

Die Messgaspumpe 23 wird von einem Pumpenmotor 22 angetrieben. Dieser Pumpenmotor 22 ist zwischen der Messgaspumpe 23 und der Wasserabscheiderpumpe 24 angeordnet und treibt weiterhin die Wasserabscheiderpumpe 24 an. Durch die erfindungsgemäße Verschlauchung, d.h. Leitungsverlegung im Messgerät, benötigt das erfindungsgemäße Messgerät im Unterschied zu den aus der einschlägigen Technik bekannten Messgeräten zur Messung der Rauchgastrübung, der Partikelkonzentration, sowie des CO-, CO₂-, HC-, O₂, NO, NO₂, NOₓ- und NH₃ - Abgasanteils nur insgesamt einen Pumpenmotor 22, eine Messgaspumpe 23 und eine Wasserabscheiderpumpe 24.

Die erfindungsgemäße Kombination und Anordnung der Messgerätkomponenten ermöglicht ein multifunktionales Abgasmessgerät, für alle gängigen Abgasmessarten, das eine quasi-simultane Messung der Rauchgastrübung, der Partikelkonzentration, sowie des CO-, CO₂-, HC-, O₂, NO, NO₂, NOₓ- und NH₃ - Abgasanteils ermöglicht. Die Messungen können auch kontinuierlich bzw. intermittierend erfolgen, wobei ein zeitlicher Unterschied von SekundenBruchteilen zwischen den einzelnen Messungen liegen kann. Hierbei wird eine bestimmte Volumeneinheit des Messgases von der Abgassonde 10 durch die verschiedenen Messzelle und Sensoren geleitet. Mit anderen Worten werden die oben genannten Messungen auf Basis der gleichen Volumeneinheit des Messgases durchgeführt im Gegensatz zu aus der einschlägig bekannten Technik bekannten Messgeräte, wo mittels mehrerer unterschiedlicher Messgeräte mit jeweils eigener Abgassonde auf Basis unterschiedlicher Messgasvolumeneinheiten nacheinander gemessen wird.

## Patentansprüche

1. Messgerät zur Bestimmung von mehreren Abgaskomponenten im Abgas von Verbrennungsmotoren, mit
- einer Abgassonde (10),
- einer Partikelmesskammer (15),
- einem Wasserabscheider (17),
- einer Infrarot-Messbank (27),
- einen O₂-Sensor (28), und
- einen Gasauslass (33),
wobei die Anordnung der vorgenannten Bauteile derart ist, dass bei einem über die Abgassonde (10) eintretenden Messgas, stromab zur Abgassonde (10) die Partikelmesskammer (15) angeordnet ist, stromab zur Partikelmesskammer (15) der Wasserabscheider (17) angeordnet ist, stromab zum Wasserabscheider (17) die Infrarot-Messbank (27) angeordnet ist, stromab zur Infrarot-Messbank (27) der O₂-Sensor (28) angeordnet ist, und das Messgas über den Gasauslass (33) in die Umgebung ausleitbar ist, **gekennzeichnet dadurch, dass** das Messgerät ausgestaltet ist, aus einem durch die Partikelmesskammer (15) ermittelten Messgas-Partikelkonzentrationswertes mittels eines linearen Umrechnungsverfahrens ein K-Wert für die Opazität des Messgases zu ermitteln.

2. Messgerät nach Anspruch 1, **dadurch gekennzeichnet, dass** die Partikelmesskammer (15) dazu geeignet ist, die Messgas-Partikelkonzentration mittels eines Laserstreulichtverfahrens zu messen.

3. Messgerät nach zumindest einem der Ansprüche 1- 2, das weiter einen Pumpenmotor (22), eine Messgaspumpe (23) und eine Wasserabscheiderpumpe (24) umfasst, wobei der Pumpenmotor (22) dazu geeignet ist, die Messgaspumpe (23) und die Wasserabscheidepumpe (24) anzutreiben.

4. Messgerät nach Anspruch 3, **dadurch gekennzeichnet, dass** die Messgaspumpe (22) in einer Messgasleitung zwischen dem Wasserabscheider (17) und der Infrarot-Messbank (27) angeordnet ist.

5. Messgerät nach Anspruch 3 oder 4, **dadurch gekennzeichnet, dass** die Messgasumpe (22) und die Wasserabscheiderpumpe (23) als Doppelmembranpumpen ausgebildet sind.

6. Messgerät nach zumindest einem der Ansprüche 1 - 5, wobei das Messgas nach der IR-Messbank (27) zu einem NO-Sensor (29) und einem NO₂-Sensor (30) leitbar ist, die zu dem O₂-Sensor (28) parallel geschaltet sind.

7. Messgerät nach zumindest einem der Ansprüche 1 - 6, wobei das Messgas nach der IR-Messbank (27) zu einem NH₃-Sensor (31) leitbar ist, der zu dem O₂-Sensor (28) parallel geschaltet ist.

8. Messgerät nach zumindest einem der Ansprüche 1 - 7, wobei das Messgas vor Eintritt in die Partikelmesskammer (15) durch ein Heizelement (14) leitbar ist.

9. Messgerät nach zumindest einem der Ansprüche 1 - 8, wobei das Messgerät dazu geeignet ist, die Messung von mehreren Abgaskomponenten auf Basis einer definierten Abgasvolumeneinheit durchzuführen.

10. Messgerät nach Anspruch 9, wobei das Messgerät dazu geeignet ist, die Messung von mehreren Abgaskomponenten auf Basis der definierten Abgasvolumeneinheit quasi-simultan durchzuführen.

## Claims

1. A measuring device for determining a plurality of exhaust gas components in the exhaust gas of internal combustion engines, comprising
- an exhaust gas probe (10),
- a particle measuring chamber (15),
- a water separator (17),
- an infrared measuring bench (27)
- an O₂ sensor (28), and
- a gas outlet (33),
wherein the arrangement of said components is such, that, for a sample gas entering via the exhaust gas probe (10), the particle measuring chamber (15) is arranged downstream of the exhaust gas probe (10), the water separator (17) is arranged downstream of the particle measuring chamber (15), the infrared measuring bench (27) is arranged downstream of the water separator (17), the O₂ sensor (28) is arranged downstream of the infrared measuring bench (27), and the sample gas is dischargeable via the gas outlet (33) to the surroundings,
**characterized in that** the measuring device is configured to obtain a K-value for the opacity of the sample gas from a sample gas particle concentration value determined by the particle measuring chamber (15) using a linear conversion process.

2. The measuring device according to claim 1, **characterized in that** the particle measurement chamber (15) is configured to measure the sample gas particle concentration using a laser scattering technique.

3. The measuring device according to claim 1 or 2, further comprising a pump motor (22), a sample gas pump (23) and a water separator pump (24), wherein the pump motor (22) is adapted to drive the sample gas pump (23) and the water separator pump (24).

4. The measuring device according to claim 3, **characterized in that** the sample gas pump (22) is arranged in a sample gas line between the water separator (17) and the infrared measuring bench (27).

5. The measuring device according to claim 3 or 4, **characterized in that** the sample gas pump (22) and the water separator pump (23) are formed as double diaphragm pumps.

6. The measuring device according to at least one of the claims 1-5, wherein downstream of the IR measuring bench (27) said sample gas is directable to a NO sensor (29) and a NO₂ Sensor (30), which are arranged in parallel to the O₂ sensor (28).

7. The measuring device according to at least one of the claims 1-6, wherein downstream of the IR measuring bench (27) the sample gas is directable to a NH₃ sensor (31), which is arranged in parallel to the O₂ sensor (28).

8. The measuring device according to at least one of the claims 1-7, wherein the sample gas is directable through a heating element (14) before entering the particle measuring chamber (15).

9. The measuring device according to at least one of the claims 1-8, wherein the measurement device is adapted to perform the measurment of a plurality of exhaust gas components based on a defined exhaust gas unit volume.

10. The measuring device according to claim 9, wherein the measurement of a plurality of exhaust gas components based on the defined exhaust gas unit volume is performed quasi-simultaneously.

## Revendications

1. Appareil de mesure destiné à la détermination de plusieurs composantes dans les gaz d'échappement de moteurs à combustion interne, comportant
- une sonde à gaz d'échappement (10),
- une chambre de mesure de particules (15),
- un séparateur d'eau (17),
- un banc de mesure infrarouge (27),
- un capteur O₂ (28), et
- une sortie de gaz (33),
l'agencement des composants précités étant tel que, les gaz à mesurer entrant par la sonde à gaz d'échappement (10), la chambre de mesure de particules (15) est agencée en aval de la sonde à gaz d'échappement (10), le séparateur d'eau (17) est agencé en aval de la chambre de mesure de particules (15), le banc de mesure infrarouge (27) est agencé en aval du séparateur d'eau (17), le capteur O₂ (28) est agencé en aval du banc de mesure de particules (27), et les gaz mesurés sont susceptibles de sortir dans l'environnement par la sortie de gaz,
**caractérisé en ce que** l'appareil de mesure est conçu pour déterminer une valeur K pour l'opacité des gaz de mesure au moyen d'une méthode de conversion linéaire à partir d'une valeur de concentration de particules des gaz de mesure déterminée à travers la chambre de mesure de particules (15).

2. Appareil de mesure selon la revendication 1, **caractérisé en ce que** la chambre de mesure de particules (15) est apte à mesurer la concentration des particules des gaz de mesure au moyen d'un procédé de diffusion de lumière laser.

3. Appareil de mesure selon l'une au moins des revendications 1 - 2, qui comprend en outre un moteur de pompe (22), une pompe à gaz de mesure et une pompe de séparateur d'eau (24), le moteur de pompe (22) étant apte à entraîner la pompe à gaz de mesure (23) et la pompe de séparateur d'eau (24).

4. Appareil de mesure selon la revendication 3, **caractérisé en ce que** la pompe à gaz de mesure (22) est agencée dans une conduite à gaz de mesure entre le séparateur d'eau (17) et le banc de mesure infrarouge (27).

5. Appareil de mesure selon la revendication 3 ou 4, **caractérisé en ce que** la pompe à gaz de mesure (22) et la pompe de séparateur d'eau (23) sont réalisées sous la forme de pompes à double membrane.

6. Appareil de mesure selon l'une au moins des revendications 1 - 5, les gaz de mesure pouvant être amenés, après le banc de mesure infrarouge (27), à un capteur NO (29) et à un capteur NO₂ (30) qui sont branchés en parallèle au capteur O₂ (28).

7. Appareil de mesure selon l'une au moins des revendications 1 - 6, les gaz de mesure pouvant être amenés, après le banc de mesure infrarouge (27), à un capteur NH₃ (31) qui est branché en parallèle au capteur O₂ (28).

8. Appareil de mesure selon l'une au moins des revendications 1 - 7, les gaz de mesure pouvant être amenés à travers un élément de chauffage (14), avant d'entrer dans la chambre de mesure de particules (15).

9. Appareil de mesure selon l'une au moins des revendications 1 - 8, l'appareil de mesure étant apte à exécuter la mesure de plusieurs composantes des gaz d'échappement sur la base d'une unité définie de volume de gaz d'échappement.

10. Appareil de mesure selon la revendication 9, l'appareil de mesure étant apte à exécuter quasiment simultanément la mesure de plusieurs composantes des gaz d'échappement sur la base d'une unité définie de volume de gaz d'échappement.
